# EUROPEAN PATENT APPLICATION

(11) **EP 2 339 580 A2**
(43) Date of publication of application: **29.06.2011**
(21) Application number: 10015448.3
(22) Date of filing: 08.12.2010
(51) Int. Cl.: G11B 7/085

(54) **Optical disc drive**

(30) Priority: 15.12.2009 KR 20090124800
(71) Applicant: Hitachi-LG Data Storage Korea, Inc., Geumcheon-gu Seoul 153-803 (KR)
(72) Inventor: Kim, Sucheol, Geumcheon-gu Seoul, 153-803 (KR); Soh, Wookyoung, Geumcheon-gu Seoul, 153-803 (KR)
(74) Representative: Katérle, Axel

(57) **Abstract**

An optical disk drive (ODD) is provided. The ODD includes an optical pickup unit; and at least one pickup guide for contacting with at least one guide (20) that guides a motion of the pickup unit, wherein the pickup guide includes at least one oil housing unit (60) for housing oil (OL) applied to the guide. The oil housing unit is provided in a quadrangular or triangular groove shape toward a portion contacting with the guide in the pickup guide. Further, the oil housing unit is formed at both sides of the pickup guide in a length direction of the guide, or when two pickup guides are coupled to at least one guide, the oil housing unit is formed only at a far position from the other pickup guide in each of the two pickup guides. Therefore, a contamination phenomenon of an optical pickup unit due to scattering of oil can be reduced.

## Description

### BACKGROUND

### 1. Field

The present invention relates to an optical disk drive, and more particularly, to an optical disk drive that can reduce a contamination phenomenon of an optical pickup unit due to scattering of oil in a process in which the optical pickup unit moves along a guide.

### 2. Background

In general, an optical disk drive (ODD) is a device that records data in or reads data from various type optical disks such as a CD, a DVD, and a BD using laser.

Even if an optical disk has a large capacity, the optical disk has an advantage that can conveniently carry and can be repeatedly re-recorded and thus is widely used.

The ODD for recording data in an optical disk and for reading data from an optical disk includes a tray type ODD for loading or unloading an optical disk in a method of loading the optical disk in a tray and a slot-in type ODD for automatically inserting an optical disk into an ODD by a driving motor by inserting an optical disk into a front opening.

The optical disk loaded in a tray recedes into the ODD to receive a driving force from a spindle motor and to rotate in a high speed. When the optical disk rotates, an optical pickup moves in a radius direction of the optical disk to record data in the optical disk, or to read the recorded data.

### SUMMARY

The present invention has been made in view of the above problems, and provides an ODD that can reduce a contamination phenomenon of an optical pickup unit due to scattering of oil in a process in which the optical pickup unit moves along a guide.

In accordance with an aspect of the present invention, an ODD comprises: an optical pickup unit; and at least one pickup guide for contacting with at least one guide that guides a motion of the pickup unit, wherein the optical pickup guide includes at least one oil housing unit for housing oil applied to the guide.

In an embodiment, the oil housing unit may be provided in a groove shape toward a portion contacting with the guide in the pickup guide.

In an embodiment, in the oil housing unit, a sectional shape of the groove may be a quadrangle or a triangle.

In an embodiment, with respect to a groove shape of the oil housing unit, in a portion, of the pickup guide, adjacent to the guide, a width of a sectional shape in a length direction of the guide decreases as approaching the guide.

In an embodiment, the oil housing unit may be formed at both sides of the pickup guide in a length direction of the guide.

In an embodiment, two pickup guides may be coupled to at least one guide, and the oil housing unit may be formed only at a far position from the other pickup guide in each of the two pickup guides.

In an embodiment, the pickup guide may be slidably coupled to the guide.

### BRIEF DESCRIPTION OF THE DRAWINGS

Arrangements and embodiments may be described in detail with reference to the following drawings in which like reference numerals refer to like elements and wherein:
FIG. 1 is a top plan view of an ODD according to an embodiment of the present invention;
FIG. 2 is an enlarged perspective view illustrating a portion A of the ODD of FIG. 1;
FIG. 3 is a cross-sectional view illustrating the ODD taken along line I-I of FIG. 2;
FIGS. 4 and 5 are cross-sectional views illustrating an operating process of the ODD of FIG. 1;
FIG. 6 is a cross-sectional view illustrating an ODD according to another embodiment of the present invention; and
FIG. 7 is a cross-sectional view illustrating an ODD according to yet another embodiment of the present invention.

### DETAILED DESCRIPTION

These and other objects of the present application will become more readily apparent from the detailed description given hereinafter. The present invention can be variously changed and has several embodiments and thereinafter, a specific embodiment is described in detail with reference to the drawings. Like reference numerals designate like elements throughout the specification. Detailed descriptions of well-known functions and structures incorporated herein may be omitted to avoid obscuring the subject matter of the present invention. Further, numerals (e.g., a first and a second) used in a process of describing the present application are identification symbols for identifying one constituent element from other constituent elements.

Hereinafter, embodiments of the present invention are described in detail with reference to the accompanying drawings. The suffixes 'module', 'unit', and 'part' may be used for elements in order to facilitate the disclosure. Significant meanings or roles may not be given to the suffixes themselves and it is understood that the module', 'unit', and 'part' may be used together or interchangeably.

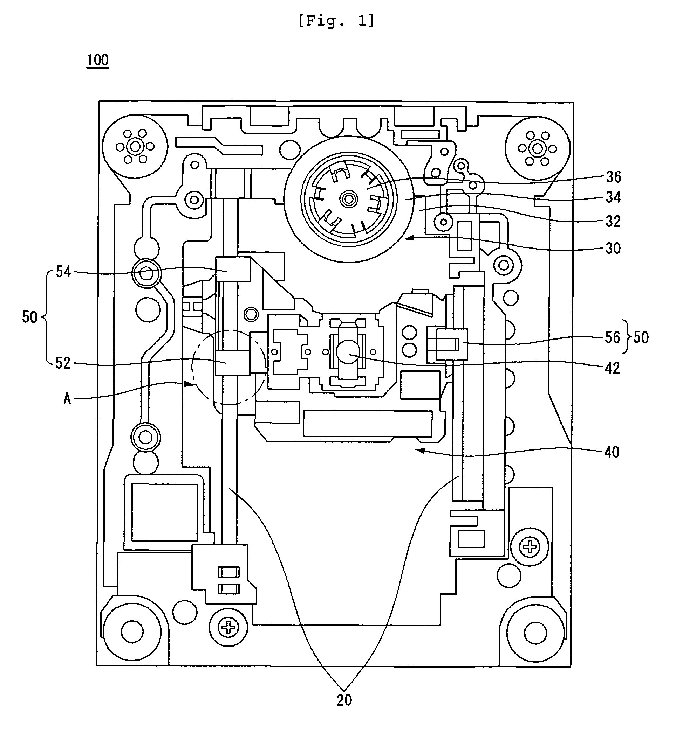

FIG. 1 is a top plan view of an ODD according to an embodiment of the present invention.

As shown in FIG. 1, an ODD 100 according to an embodiment of the present invention includes a clamp unit 30 for generating the rotary power by chucking a loaded optical disk D and an optical pickup unit 40 for reading data from the rotating optical disk D and for recording data in the rotating optical disk D.

The clamp unit 30 is a device for rotating the optical disk D with the rotary power generated by a spindle motor (not shown). The clamp unit 30 includes a lift frame 32 for chucking a loaded optical disk D, a turntable 34 for contacting with a clamping area D1 of the optical disk D, a clamp head 36 for coupling to an upper clamp (not shown), and an optical disk fixing part (not shown) for generating a coupling force at the inner circumference of the optical disk D.

The lift frame 32 is obliquely provided in a diagonal direction from a central part of the ODD 100 at which the turntable 34 is positioned. When loading of the optical disk D is complete, the lift frame 32 moves to the upside, which is a thickness direction of the ODD 100. When the lift frame 32 moves to the upside, each element of the clamp unit 30 mounted to interlock with the lift frame 32 moves to the upside to couple to the upper clamp.

The turntable 34 is a portion that substantially contacts with a clamping area (not shown) of the optical disk D among elements of the clamp unit 30. The clamping area indicates the innermost of the optical disk D, and data are not recorded in the clamping area. When the lift frame 32 rises, the turntable 34 contacts with a corresponding area of the upper clamp, and the optical disk D is interposed therebetween to be coupled thereto. The turntable 34 is made of a rubber material or a soft plastic material in order to increase adhesive strength of the optical disk D.

The clamp head 36 is an area convex at the upside of a central part of the turntable 34. When the lift frame 32 rises, the clamp head 36 is coupled to the upper clamp, and thus until the lift frame 32 declines, coupling between the clamp head 36 and the upper clamp is not released. Further, the optical disk fixing part 38 is provided in the clamp head 36 to assist coupling between the clamp head 36 and the upper clamp and between the clamp head 36 and the optical disk D.

The optical pickup unit 40 reads data from and records data on the rotating optical disk D chucked to the clamp unit 30. The optical pickup unit 40 includes an optical pickup 42 for radiating laser to an optical disk surface and for detecting the reflected laser to read data and an optical pickup transfer part (not shown) for moving the optical pickup 42 to an appropriate position for reading or recording data. The optical pickup unit 40 moves in the front-rear direction of the ODD 100 by a control signal of a controller (not shown). That is, in order to store information at the specific position of a rotating optical disk or to read the stored information from a specific position of a rotating optical disk, the optical pickup unit 40 moves to the specific position. The optical pickup unit 40 moves by the rotary power generated by an optical pickup unit transfer motor (not shown). The optical pickup unit 40 moves in the front-rear direction along a guide 20 provided in the ODD 100.

The guide 20 is provided in a rod shape in the front-rear direction of the ODD 100. As described above, the optical pickup unit 40 moves by the rotary power generated in the optical pickup transfer part. The rotary power is transferred to the optical pickup unit 40 to move the optical pickup unit 40 in the front-rear direction. The optical pickup unit 40 moves along the guide 20 provided at the left and right sides thereof. That is, an optical pickup guide 50 provided in the optical pickup unit 40 is slidably coupled to the guide 20 and thus the optical pickup guide 50 moves along the guide 20. The guide 20 is made of a metal material in order to secure strength. Further, in order to minimize friction with the optical pickup guide 50 that performs a sliding movement, a surface of the guide 20 is constantly processed. Further, oil is applied to the guide 20. As well known, by applying oil to operating portions of various device elements, friction and wear between the device elements can be reduced.

Oil applied to the guide 20 may be liquid or semi-solid according to oil intrinsic viscosity. As oil is applied to the guide 20, loss of a transfer force generating in the optical pickup transfer part is minimized, and the optical pickup unit 40 can be transferred.

The optical pickup guide 50 is integrally formed with the optical pickup unit 40, or is separately formed from the optical pickup unit 40 to be assembled in the optical pickup unit 40. Two optical pickup guides 50 are provided at each of the left and right sides of the optical pickup unit 40, or two optical pickup guides 50 are provided at one side and one optical pickup guide 50 is provided at the other side. In the ODD 100 according to an embodiment of the present invention, as shown in FIG. 1, a case where first and second optical pickup guides 52 and 54 are provided at the left side of the optical pickup unit 40 and a third optical pickup guide 56 is provided at the right side of the optical pickup unit 40 is described and therefore a description of other cases will be omitted.

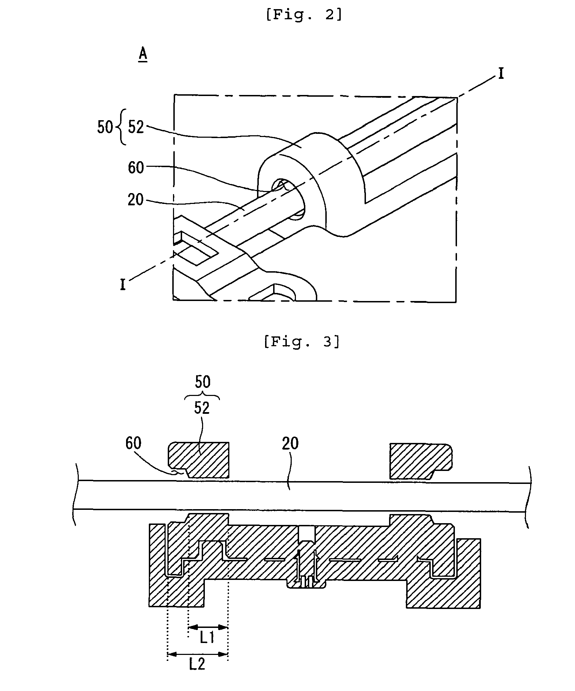

A coupling opening is provided in a central part of the optical pickup guide 50 in the front-rear direction of the ODD 100. The guide 20 is inserted into the coupling opening. Because the optical pickup guide 50 can move along the guide 20, the optical pickup unit 40 moves along the guide 20. As described above, in order to reduce friction between the guide 20 and the optical pickup guide 50, oil is applied to the guide 20. However, when the optical pickup guide 50 moves toward the front or the rear along the guide 20, the applied oil is accumulated in a transfer direction of the optical pickup guide 50. Further, when the optical pickup guide 50 quickly moves, oil applied to the guide 20 may be scattered by contact with the optical pickup guide 50. When oil is scattered to other devices within the ODD 100, such as the optical pickup 42, the scattered oil may have no good influence on operation of the ODD 100. Therefore, an oil housing unit 60 of FIG. 2 for preventing oil applied to the guide 20 from scattering is provided in the optical pickup guide 50 of the ODD 100 according to an embodiment of the present invention.

FIG. 2 is an enlarged perspective view illustrating a portion A of the ODD of FIG. 1.

As shown in FIG. 2, in the optical pickup guide 50 according to an embodiment of the present invention, the oil housing unit 60 is provided in a contact portion of the guide 20 and the optical pickup guide 50.

The oil housing unit 60 is a groove provided in a contact portion of the guide 20 and the optical pickup guide 50. The oil housing unit 60 formed in the optical pickup guide 50 is formed along the circumference of a contact portion of the guide 20 and the optical pickup guide 50. As the oil housing unit 60 is formed along the outer circumference of the guide 20, when the optical pickup guide 50 moves in the front-rear direction along the guide 20, oil applied to the guide 20 is housed within the oil housing unit 60. Therefore, because a scattering possibility of oil in a contact portion of the guide 20 and the optical pickup guide 50 is remarkably low, a failure possibility of the ODD 100 can be remarkably lowered.

FIG. 3 is a cross-sectional view illustrating the ODD taken along line I-I of FIG. 2.

As shown in FIG. 3, in a sectional shape of the optical pickup guide 50, the oil housing unit 60 of the optical pickup guide 50 according to an embodiment of the present invention is formed while reducing a sectional shape of the optical pickup guide 50. Further, in the front-rear length direction of the guide 20, a length of a portion in which the oil housing unit 60 is provided is shorter than that of other portions of the optical pickup guide 50. That is, when a front-rear direction length of an outer circumferential portion of the optical pickup guide 50 is a second length L2 and when the front-rear direction length of an inner circumferential portion thereof is a first length L1, the first length L1 is shorter than the second length L2. By such a structure, the oil housing unit 60 has a groove shape formed toward the inside of the optical pickup guide 50.

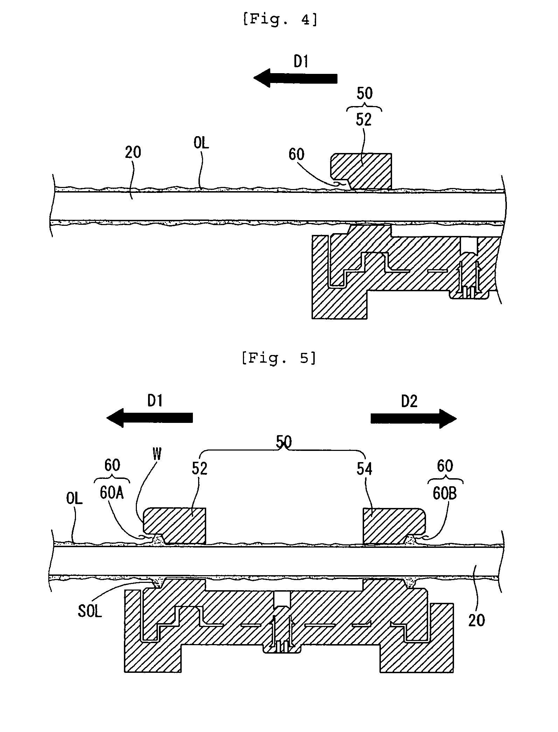

FIGS. 4 and 5 are cross-sectional views illustrating a process of operating the ODD of FIG. 1.

As shown in FIGS. 4 and 5, the oil housing unit 60 of the optical pickup guide 50 according to an embodiment of the present invention houses oil OL to prevent oil OL applied to the guide 20 from scattering.

As shown in FIG. 4, the optical pickup guide 50 receives a driving force generated in the optical pickup transfer part and moves in a first direction D1. Oil OL for reducing friction between the guide 20 and the optical pickup guide 50 is applied on the surface of the guide 20. When the optical pickup guide 50 starts to move in the first direction D1, oil applied on the surface of the guide 20 starts to stack in the oil housing unit 60.

As shown in FIG. 5, when the optical pickup guide 50 moves a predetermined distance in the first direction D1, oil SOL is housed in the oil housing unit 60. If the oil housing unit 60 is not provided, oil SOL stacked between the guide 20 and the optical pickup guide 50 is stuck in an outer surface W of the optical pickup guide 50. When oil OL is stuck in the outer surface W of the optical pickup guide 50, the oil OL may be separated from the outer surface W in a process in which the optical pickup guide 50 moves in the first and second directions D1 and D2, and the separated oil OL may contaminate other internal elements of the ODD 100.

The oil housing units 60 are provided in symmetry about the first and second optical pickup guides 52 and 54. That is, a first oil housing unit 60A is provided toward the front side of the ODD 100, and a second oil housing unit 60B is provided toward the rear side of the ODD 100. That is, in each of the optical pickup guides 52 and 54, the oil housing unit 60 is formed only at a far position from the other optical pickup guide. Because the first and second oil housing units 60A and 60B are provided in bilateral symmetry, the first and second optical pickup guides 52 and 54 have a symmetrical shape in the front-rear direction of the ODD 100.

Because the oil housing units 60 are provided in symmetry in the front-rear direction, the oil housing unit 60 houses oil SOL stacked in the first oil housing unit 60A when moving in the first direction D1, and the oil housing unit 60 houses oil SOL stacked in the second oil housing unit 60B when moving in the second direction D2.

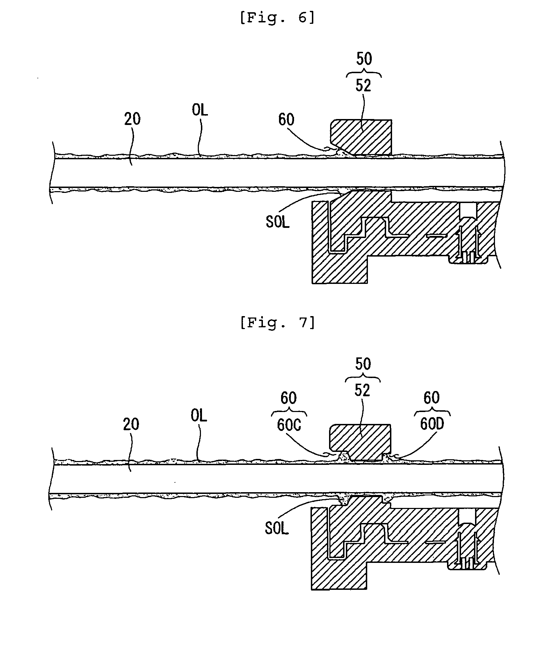

FIG. 6 is a cross-sectional view illustrating an ODD according to another embodiment of the present invention.

As shown in FIG. 6, in the oil housing unit 60 according to another embodiment of the present invention, the optical pickup guide 50 has a continuously reducing sectional shape. A sectional shape of the oil housing unit 60 of FIG. 4 according to an embodiment of the present invention is a quadrangle, but a sectional shape of the oil housing unit 60 according to another embodiment of the present invention is a triangle. In a shape of the oil housing unit 60 according to another embodiment of the present invention, oil SOL stacked in space between the guide 20 and the optical pickup guide 50 naturally moves along a shape of the oil housing unit 60.

FIG. 7 is a cross-sectional view illustrating an ODD according to yet another embodiment of the present invention.

As shown in FIG. 7, in the oil housing unit 60 according to another embodiment of the present invention, third and fourth oil housing units 60C and 60D are provided in the front-rear direction of the optical pickup guide 50. Because the oil housing units 60 are provided in the front-rear direction of the optical pickup guide 50, when the optical pickup guide 50 moves in the front-rear direction, oil is housed in the oil housing units 60.

The foregoing embodiments describes a case where an oil housing unit having a quadrangular sectional shape is provided at the front side, an oil housing unit having a triangular sectional shape is provided at the front side, or oil housing units having a quadrangular sectional shape are provided at the front and rear sides, but such a description describes a specific embodiment according to the present invention. Therefore, a combination of the above-described oil housing units can be appropriately embodied in one optical pickup guide and may be variously modified as an oil housing unit of a half-circle shape.

According to an ODD of the present invention, in a process in which an optical pickup unit moves along a guide, a contamination phenomenon of the optical pickup unit due to scattering of oil can be reduced.

Although embodiments of the present invention have been described in detail hereinabove, it should be clearly understood that many variations and modifications of the basic inventive concepts herein described, which may appear to those skilled in the art, will still fall within the spirit and scope of the embodiments of the present invention as defined in the appended claims.

## Claims

1. An optical disk drive, comprising:
an optical pickup unit; and
at least one pickup guide for contacting with at least one guide that guides a motion of the pickup unit,
wherein the pickup guide includes at least one oil housing unit for housing oil applied to the guide.

2. The ODD of claim 1, wherein the oil housing unit is provided in a groove shape toward a portion contacting with the guide in the pickup guide.

3. The ODD of claim 2, wherein in the oil housing unit, a sectional shape of the groove is a quadrangle or a triangle.

4. The ODD of claim 2, wherein, with respect to a groove shape of the oil housing unit, in a portion, of the pickup guide, adjacent to the guide, a width of a sectional shape in a length direction of the guide decreases as approaching the guide.

5. The ODD of claim 1, wherein the oil housing unit is formed at both sides of the pickup guide in a length direction of the guide.

6. The ODD of claim 1, wherein two pickup guides are coupled to at least one guide, and the oil housing unit is formed only at a far position from the other pickup guide in each of the two pickup guides.

7. The ODD of claim 1, wherein the pickup guide is slidably coupled to the guide.
